# FASCICULE DE BREVET EUROPEEN

(11) **EP 1 341 093 B1**
(45) Date de publication et mention de la délivrance du brevet: **25.04.2012**
(21) Numéro de dépôt: 03075449.3
(22) Date de dépôt: 17.02.2003
(51) Int. Cl.: G06F 13/18

(54) **Accès à une ressource collective**
Zugriff zu einem verteilten Betriebsmittel
Access to a shared resource

(30) Priorité: 26.02.2002 FR 0202398
(43) Date de publication de la demande: 03.09.2003
(73) Titulaire: NXP B.V., 5656 AG Eindhoven (NL)
(72) Inventeur: De Perthuis, Hugues, c/o Société Civile S.P.I.D., 75008 Paris (FR); Desmicht, Eric, c/o Société Civile S.P.I.D., 75008 Paris (FR)
(74) Mandataire: Small, Gary James

(56) Documents cités:
- US-A- 5 649 157
- US-A- 5 948 081
- US-A- 6 092 158

## Description

### DOMAINE TECHNIQUE

L'invention concerne l'accès à une ressource collective par un ensemble de fonctions. Plus particulièrement, l'invention concerne les schémas d'accès par ordre de priorité à une ressource collective. Pratiquement, l'invention concerne un système fonctionnel comprenant un ensemble de fonctions devant accéder à une ressource collective. L'invention peut-être appliquée, par exemple, dans un dispositif de traitement de données comprenant plusieurs processeurs devant accéder à une mémoire collective. Un décodeur MPEG est un exemple d'un tel dispositif (MPEG est l'abréviation de Motion Picture Expert Group).

### ETAT DE LA TECHNIQUE ANTERIEURE

Il est possible de gérer l'accès à la ressource collective au moyen d'une interface. L'interface met en oeuvre un schéma d'accès selon lequel les fonctions peuvent accéder à la ressource collective.

Un schéma d'accès possible est caractérisé par un ordre de priorité. Une fonction doit faire une requête pour accéder à la ressource collective. L'interface recueille toutes les requêtes. Parmi les fonctions ayant une requête en cours, elle permet à la fonction ayant la plus haute priorité d'accéder à la ressource collective. Supposons à nouveau qu'un système fonctionnel comprend trois fonctions A, B et C. L'ordre de priorité peut-être A, B, C. Dans ce cas, la fonction A aura accès à la ressource collective indépendamment du fait qu'une requête de la fonction B ou C soit en cours. La fonction B aura accès à la ressource collective à condition qu'une requête de la fonction A ne soit pas en cours. La fonction C aura accès à la ressource à condition qu'une requête de la fonction A ou B ne soit pas en cours. Un tel schéma d'accès sera dénommé schéma d'accès par priorité dans la suite.

Le schéma d'accès par priorité est mentionné dans la demande de brevet européen publiée sous le numéro 1081603-A1. En principe, chaque fonction doit avoir un accès à la ressource collective suffisant pour qu'elle puisse être effectuée correctement. L'accès d'une fonction quelconque à la ressource collective est déterminé par deux facteurs: premièrement, la capacité d'accès qu'offre la ressource collective et, deuxièmement, le schéma d'accès appliqué.

En principe, il est possible de garantir à chaque fonction un accès suffisant en faisant en sorte que la ressource collective offre une capacité d'accès relativement importante. Toutefois, plus grande est la capacité d'accès (bande passante, vitesse) qu'offre la ressource collective, plus coûteuse sera, en général, la ressource collective.

Le besoin d'accès d'une fonction peut varier dans le temps. Il est possible qu'une fonction doive accéder intensivement à la ressource collective pendant une certaine période et que cette fonction n'ait pas besoin d'un tel accès intensif pendant une autre période. Le schéma d'accès par priorité donne l'accès à la ressource collective sur demande. Ce schéma apporte donc de la flexibilité et, par conséquent, une utilisation plus efficace de la ressource collective. Le schéma d'accès par priorité nécessite en effet, moins de capacité d'accès pour la ressource collective par rapport à un schéma d'accès fixe où le modèle d'accès comprend plusieurs intervalles de temps attribués chacun à une certaine fonction. Par conséquent, le schéma d'accès par priorité permet, en principe, une réduction de coût au niveau de la ressource collective.

Le document US 6 092 158 présente un procédé d'arbitrage entre des commandes possédant des niveaux de priorité différents. A cet effet, le procédé intègre un contrôleur de mémoire possédant un bloc de file de commandes comprenant une pluralité de files de commandes adaptées pour recevoir différents types de commandes.

Le document US 5 948 081 présente un système de gestion d'accès à une mémoire comprenant notamment un contrôleur de mémoire et un manager de files de lecture et d'écriture. Le contrôleur de mémoire est adapté pour envoyer des commandes aux différentes files ou pour supprimer des commandes de ces files, selon différents modes de réalisation.

### EXPOSE DE L'INVENTION

Toutefois, le schéma d'accès par priorité a certains inconvénients que l'invention prend en considération. Il sera généralement difficile de vérifier si chaque fonction a suffisamment d'accès à la ressource collective et de vérifier si une fonction a toujours accès dans un délai critique suite à une requête. Des calculs ou des simulations à caractère statistique complexes sont nécessaires pour vérifier si un certain schéma d'accès par priorité permet un fonctionnement correct. En soi, ceci entraîne déjà un certain coût au niveau du développement.

L'exemple qui suit illustre un problème de blocage qui peut se produire avec un schéma par priorité. Il y a trois fonctions A, B et C dans l'ordre de priorité. A un certain instant, la fonction A a accès à la ressource collective. Pendant cet accès les fonctions B et C font une requête. L'accès de la fonction A étant achevé, la fonction B aura accès à la ressource collective. La requête de la fonction C reste en attente. La fonction A présente une requête pendant l'accès de la fonction B à la ressource collective. Cela est souvent le cas lorsque les données sont traitées par la fonction A puis ensuite envoyées, après un certain temps de traitement, pour écriture dans la ressource collective. L'accès de la fonction B étant achevé, la fonction A aura à nouveau accès à la ressource collective. Si ceci continue, la fonction A fait une requête pendant l'accès de la fonction B et vice versa, la fonction C se trouvera effectivement bloquée pour l'accès à la ressource collective. Ce blocage durera jusqu'au moment où la fonction A ou B, ou les deux, diminueront la fréquence de leurs requêtes.

De plus on note qu'avec un tel blocage, la fonction A finit en premier sa tâche puis c'est la fonction B, lorsque la fonction C accède à la ressource collective, elle peut ne pas être en mesure d'exploiter toute la bande passante qui lui est offerte. Il en résulte que les accès disponibles sont mal répartis pour ces trois fonctions.

Un but de l'invention est de permettre une meilleure exploitation de la ressource collective et par conséquent une réduction de coût.

L'invention propose un système selon la revendication 1, une méthode selon la revendication 2, ainsi qu'un produit programme d'ordinateur selon la revendication 3.

Ainsi, l'invention garantit aux fonctions d'avoir un comportement différent en lecture et en écriture. Cela permet de réguler le fonctionnement des fonctions et de répartir les accès en exploitant notamment la durée du traitement des données. En effet les niveaux de priorité en lecture étant supérieurs à ceux en écriture les fonctions reçoivent chacune les données à traiter avant toute sortie de données traitées pour écriture vers la ressource collective. Ainsi l'invention permet que les fonctions aient, le plus possible, des données à traiter en continu et en parallèle et qu'elles exploitent leurs accès de manière plus régulière car la sortie des données traitées est limitée et donc régulée par les accès en écriture à la ressource collective.

Dans un mode de réalisation avantageux, plusieurs états (I) sont parcourus, un état (I) étant défini par un ordre de priorité dans lequel au moins un niveau de priorité constitue une possibilité d'accès pour une des fonctions appartenant à un sous-ensemble de fonctions se partageant le même niveau de priorité sur plusieurs états (I). Ainsi il est possible dans un mode de réalisation préféré, qu'un même niveau de priorité constitue une possibilité d'accès en écriture partagée, sur le parcours de plusieurs états (I), entre les possibilités d'accès en écriture d'un sous-ensemble de fonctions.

Ceci permet que les fonctions travaillent en parallèle sans générer de blocage. Avantageusement, lorsque l'interface saute d'un état (I) où la possibilité d'accès est offerte à une des fonctions du sous-ensemble de fonctions dans l'arbitrage selon l'ordre de priorité, à un état suivant, la possibilité d'accès est offerte à une autre des fonctions dudit sous-ensemble. Ainsi, qu'une fonction du sous-ensemble ayant un niveau de priorité commun, fasse un accès ou qu'elle n'en fasse pas, la fonction suivante du sous-ensemble peut profiter de la possibilité d'accès sans qu'il y ait blocage. L'invention permet donc une meilleure exploitation de la mémoire. Par conséquent, ceci permet à la ressource collective d'avoir une capacité d'accès réduite par rapport au schéma d'accès fixe. Par conséquent, l'invention permet une réduction de coût par rapport au schéma d'accès fixe.

L'invention sera décrite ci-dessous plus en détail par référence à des figures.

### BREVE DESCRIPTION DES FIGURES

La Figure 1 illustre un dispositif de traitement de signaux selon l'invention ;
La Figure 2 illustre le fonctionnement général de l'interface mémoire du dispositif ;
La Figure 3 illustre un bloc de traitement de signaux du dispositif ;
La Figure 4 illustre l'interface mémoire du dispositif ;
La Figure 5 illustre un accès en lecture d'un bloc ;
Les Figures 6 et 7 illustrent deux modes de réalisation selon l'invention d'arbitre pour gérer l'accès à une mémoire collective par différents processus ;
Les Figures 8a et 8b illustrent un arbitrage d'accès à une mémoire collective mis en oeuvre au sein du second mode de réalisation selon l'invention d'arbitre présenté sur la figure 7 ;
La figure 9 illustre des caractéristiques de base de l'invention.

### MODES DE REALISATION

Les remarques suivantes concernent les signes de référence. Des entités similaires sont désignées par une référence par lettres identiques dans toutes les figures. Plusieurs entités similaires peuvent apparaître dans une seule figure. Dans ce cas, un chiffre ou un suffixe est ajouté à la référence par lettres afin de distinguer des entités similaires. Le chiffre ou le suffixe peut être omis pour des raisons de convenance. Ceci s'applique pour la description ainsi que pour les revendications.

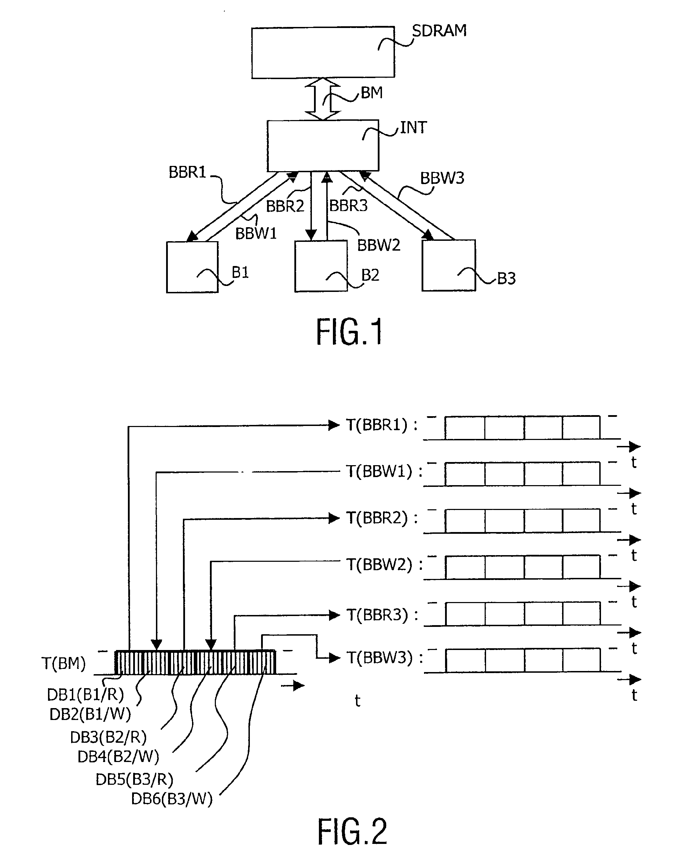

La Figure 1 illustre un dispositif de traitement de données. Le dispositif comprend une mémoire collective SDRAM, une interface mémoire INT et trois blocs de traitement de données B1, B2 et B3. Ces derniers seront nommés "bloc" dans la suite de la description. Chaque bloc B est relié à l'interface mémoire INT via un bus de lecture privé BBR et un bus d'écriture privé BBW. Chaque bus de lecture privé BBR et chaque bus d'écriture privé BBW est dédié à un certain bloc B. L'interface mémoire INT est reliée à la mémoire collective SDRAM via un bus collectif BM. Les blocs B, les bus de lecture privé BBR, les bus d'écriture privé BBW et l'interface mémoire INT peuvent faire partie d'un seul circuit intégré tandis que la mémoire collective SDRAM est un circuit externe.

Le dispositif de traitement de données fonctionne globalement comme suit. En règle générale, les blocs B reçoivent sur demande des données à traiter stockées dans la mémoire collective SDRAM. Après avoir traité ces données, les blocs B envoient les données traitées vers la mémoire collective SDRAM via l'interface mémoire INT. L'interface mémoire INT régularise l'accès à la mémoire collective SDRAM par les différents blocs B.

L'interface mémoire INT a deux fonctions de base. Premièrement, elle effectue un arbitrage entre les différents blocs B au niveau d'accès à la mémoire collective SDRAM. Un seul bloc B peut accéder à la mémoire collective SDRAM à la fois, soit en écriture soit en lecture. Ceci implique qu'un bloc B ne peut accéder à la mémoire qu'en rafale (en anglais: burst). Deuxièmement, en cas de lecture, l'interface mémoire INT transforme les rafales de données provenant de la mémoire collective SDRAM et destinées pour un certain bloc B, en flux de données sensiblement régulier. Ce flux de données est ainsi transféré via le bus de lecture privé BBR concerné vers le bloc B. En cas d'écriture, l'interface mémoire INT transforme un flux de données sensiblement régulier provenant d'un certain bloc B en rafales de données pour écriture dans la mémoire collective SDRAM.

La Figure 2 illustre le fonctionnement de l'interface mémoire INT dans un schéma d'accès par priorité simple où le bloc B1 a priorité sur le bloc B2 qui a priorité sur le bloc B3. Ce schéma correspond donc à ce qui est fait dans l'état de la technique antérieur. T(BM) représente un trafic de données sur le bus collectif BM entre la mémoire collective SDRAM et l'interface mémoire INT. T(BBR1), T(BBR2) et T(BBR3) représentent respectivement des trafics de données sur les bus de lecture privés BBR1, BBR2 et BBR3 entre l'interface mémoire INT et les blocs B1, B2 et B3. T(BBW1), T(BBW2) et T(BBW3) représentent respectivement des trafics de données sur les bus d'écriture privés BBW1, BBW2 et BBW3 entre l'interface mémoire INT et les blocs B1, B2 et B3.

Le trafic de données T(BM) est composé de rafales de données DB. Chaque rafale de données DB correspond à un accès de la mémoire collective SDRAM par un bloc B soit en écriture soit en lecture. Les références entre parenthèses qui suivent DB indiquent à quel bloc B les données dans la rafale appartiennent et, en plus, le type d'accès: écriture (W) ou lecture (R). Par exemple, DB1(B1/R) indique que la rafale de données DB1 concerne un accès en lecture à la mémoire collective SDRAM par B1.

La Figure 2 illustre que l'interface mémoire INT effectue un "lissage" des rafales de données provenant de la mémoire collective SDRAM et appartenant à un certain bloc B. Cette Figure illustre également qu'inversement l'interface mémoire INT concentre dans le temps des données provenant d'un bloc B pour écrire ces données dans la mémoire collective SDRAM en rafale (compactage de données). Donc, les trafics de données via les bus de lecture privés BBR et les bus d'écriture privés BBW ont des débits relativement faibles. Par conséquent, ceci permet aux bus de lecture privés BBR et aux bus d'écriture privés BBW d'avoir des bandes passantes relativement faibles et, de ce fait, ceci permet à ces bus d'avoir une largeur relativement modeste. A cet égard il faut noter que la taille d'un bus ne doit pas nécessairement correspondre au nombre de bits contenus dans les données transférées par ce bus. Par exemple, une donnée comprenant 16 bits se laisse découper en mots de 4 bits. Ainsi on peut transférer cette donnée via un bus d'une taille de 4 bits sous forme d'une succession de 4 mots.

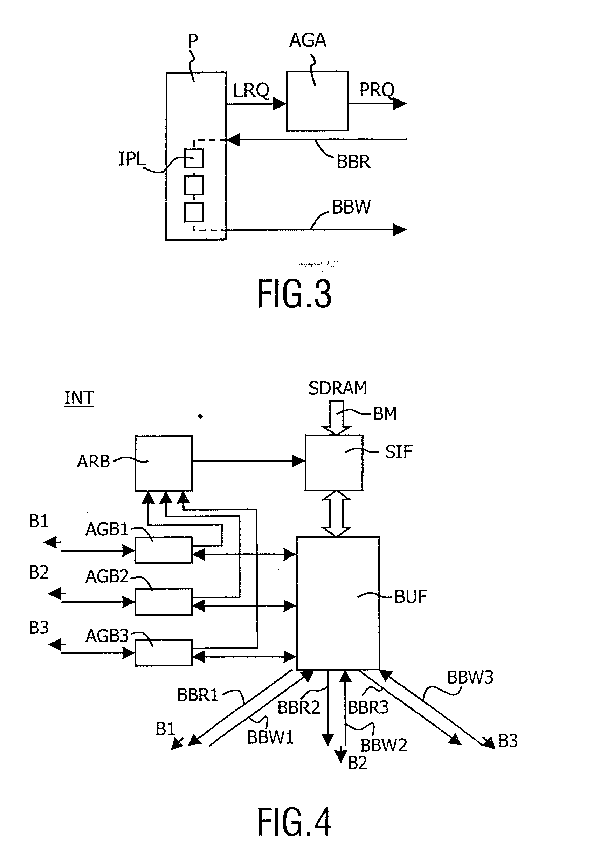

La Figure 3 illustre un bloc B. Le bloc B comprend un processeur P et un circuit d'adressage global AGA. Le processeur P fait des requêtes logiques LRQ. Supposant que le bloc B traite des données vidéo, une requête logique LRQ peut-être par exemple une demande de pixels d'une certaine ligne dans l'image courante. Le circuit d'adressage global AGA transforme la requête logique LRQ en requête physique PRQ. La requête physique PRQ définit dans la mémoire collective SDRAM les adresses physiques sous lesquelles les données demandées sont stockées. Les requêtes physiques PRQ peuvent avoir la forme suivante: une adresse de départ, un nombre d'adresses à aller chercher à partir de cette adresse et éventuellement un schéma à appliquer lors de la recherche des données. Le schéma peut être défini sous forme de : nombre d'adresses consécutives à lire, nombre d'adresses à sauter et nombre d'itérations "lire et sauter". L'AGA peut être programmable de telle façon que des paramètres de traduction définissent les traductions des requêtes logiques LRQ en requêtes physiques PRQ. Ceci permet une flexibilité de stockage des données dans la mémoire collective SDRAM.

La Figure 4 illustre l'interface mémoire INT. L'interface mémoire INT comprend un arbitre ARB, une interface d'accès SIF, un dispositif de mémoire tampon BUF et des circuits d'adressage en macro-commandes AGB. Il y a un circuit d'adressage en macro-commandes AGB pour chaque bloc B.

Le fonctionnement interne de l'interface mémoire INT est globalement comme suit. Chaque circuit d'adressage en macro-commandes AGB découpe une requête physique du bloc B auquel il est associé en macro-commandes. Une macro-commande représente une requête d'accès d'une certaine ligne dans la mémoire. Avant qu'une macro-commande soit soumise à l'arbitre ARB, le circuit d'adressage en macro-commandes AGB vérifie s'il y a suffisamment de place dans le dispositif de mémoire tampon BUF. A cet effet, il soumet d'abord la macro-commande au dispositif de mémoire tampon BUF. Si le dispositif de mémoire tampon BUF confirme qu'il y a de la place pour stocker le nombre de données défini par la macro-commande, le circuit d'adressage en macro-commandes AGB soumet la macro-commande à l'arbitre ARB. L'arbitre ARB recueille les macro-commandes provenant des différents circuits d'adressage en macro-commandes AGB et sélectionne une macro-commande pour envoi à l'interface d'accès SIF. Cette sélection se fait selon un schéma d'arbitrage qui est décrit ci-après. L'interface d'accès SIF traite les macro-commandes provenant de l'arbitre ARB dans l'ordre de leur réception. Ainsi, l'interface d'accès SIF effectue des accès à la mémoire collective SDRAM, les accès étant définis par la macro-commande en cours de traitement.

Une macro-commande permet d'accéder à X groupes d'adresses, chaque groupe contenant Y adresses, les groupes d'adresses étant séparés les uns des autres de Z mots, X, Y et Z étant des entiers. Une macro-commande contient donc les informations suivantes :
- première adresse à accéder ;
- nombre d'adresses à accéder consécutivement à la première adresse dans un groupe d'adresses (Y-1);
- nombre d'adresses à sauter entre deux groupes d'adresses consécutifs (Z) ;
- nombre de groupes d'adresses à accéder en plus du premier groupe (X-1) ;
- type d'accès : lecture ou écriture.

Un exemple d'une macro-commande au niveau du bit se fait comme suit. On suppose que les données stockées dans la mémoire collective SDRAM sont de 32 bits de large et la mémoire collective SDRAM a une taille maximale de 256 Mbits. Ceci implique qu'une adresse s'exprime sur 23 bits. On suppose de plus que les accès sont limités à une taille maximale de 16 adresses. Une telle limite est préférable du point de vue de latence. Donc X-1 et Y-1 valent 15 au maximum et, par conséquent, peuvent être codés sur 4 bits. Enfin, une ligne contient au maximum 512 adresses suivant la configuration de la mémoire collective SDRAM. Par conséquent, le nombre d'adresses à sauter ne peut excéder 511 et donc ce nombre peut être codé sur 9 bits. Les macro-commandes ont donc une taille de 23+2×4+9+1=41 bits. L'adresse peut être codée sur les bits 40 à 18, le type d'accès sur le bit 17, le nombre de mots à lire (Y-1) sur les bits 16 à 13, le nombre de mots à sauter (Z) sur les bits 12 à 4, et le nombre de groupes de mots (X-1) sur les bits 3 à 0.

Des exemples d'interface d'accès de l'interface mémoire, de dispositif de mémoire tampon de l'interface mémoire et de dispositif de mémoire tampon pour lecture et écriture sont connus et par exemple décrits dans le brevet cité auparavant.

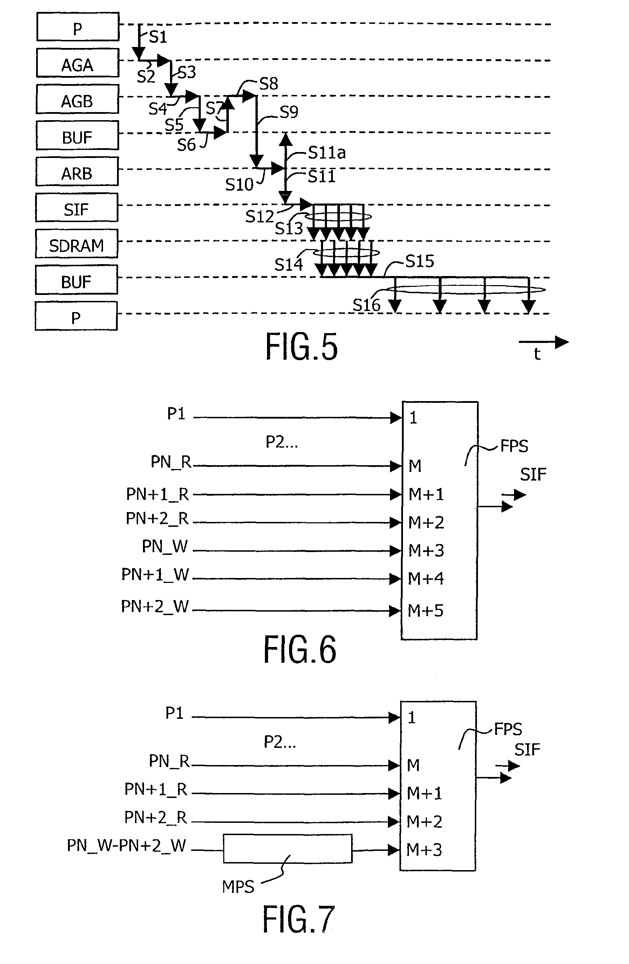

La Figure 5 illustre une procédure d'accès à la mémoire collective SDRAM en lecture par un certain bloc B. La dimension horizontale représente le temps. La dimension verticale de ce diagramme représente les différents éléments fonctionnels qui entrent en jeu. Le diagramme contient des flèches. Ces flèches représentent des différentes étapes S dans la procédure d'accès à la mémoire d'interface SRAM.
S1 = Le processeur P du bloc B concerné soumet une requête logique LRQ au circuit d'adressage global AGA. La requête logique LRQ spécifie un sous-ensemble de données, par exemple, les pixels de luminance d'une ligne, dans un ensemble de données à traiter, par exemple une image.
S2 = Le circuit d'adressage global AGA transforme la requête logique LRQ en requête physique PRQ.
S3 = Le circuit d'adressage global AGA soumet la requête physique PRQ au circuit d'adressage en macro-commandes AGB.
S4 = Le circuit d'adressage en macro-commandes AGB transforme la requête physique PRQ en macro-commandes.
S5 = Le circuit d'adressage en macro-commandes AGB soumet la première des macro-commandes dérivées de la requête physique PRQ au dispositif de mémoire tampon BUF.
S6 = Le dispositif de mémoire tampon BUF vérifie s'il y a de la place pour stocker le nombre de données spécifiées par la macro-commande.
S7 = Le dispositif de mémoire tampon BUF confirme au circuit d'adressage en macro-commandes AGB qu'il y a de la place (en anglais : acknowledge).
S8 = Représente un certain délai.
S9 = Le circuit d'adressage en macro-commandes AGB soumet la macro-commande à l'arbitre ARB.
S10 = L'arbitre ARB traite la macro-commande en tant que demande d'accès à la mémoire collective SDRAM selon un schéma d'arbitrage valable pour tous les accès des blocs à la mémoire collective SDRAM. L'invention concerne la structure de ce schéma d'arbitrage.
S11 = L'arbitre ARB soumet la macro-commande à l'interface d'accès SIF.
S11a = L'arbitre ARB signale au dispositif de mémoire tampon BUF que la macro-commande a été soumise à l'interface d'accès SIF (en anglais : acknowledge).
S12 = La macro-commande est en attente dans l'interface d'accès SIF qui traite d'abord les macro-commandes précédemment reçues.
S13 = L'interface d'accès SIF génère des signaux de contrôle pour la mémoire collective SDRAM à la base de la macro-commande. Ces signaux de contrôle ont pour effet que les données sous les adresses spécifiées par la macro-commande sont successivement lues.
S14 = Les données successivement lues de la mémoire collective SDRAM sont transférées au dispositif de mémoire tampon BUF.
S15 = Les données sont stockées temporairement dans le dispositif de mémoire tampon BUF.
S16 = Le dispositif de mémoire tampon BUF transfère les données au processeur P d'une façon sensiblement régulière.

Les étapes S5-S15 sont répétées pour chaque macro-commande suite à la requête logique LRQ faite à l'étape S1.

Les étapes suivantes ne sont pas représentées dans la Figure 5. Suite à l'étape S1, le circuit d'adressage global AGA envoie un signal de confirmation (en anglais : acknowledge) au processeur P. Ce signal indique que la requête logique LRQ a été acceptée et sera traitée. En réponse au signal de confirmation, le processeur P fait une nouvelle requête logique et la maintient jusqu'à nouvel ordre. Quand le circuit d'adressage en macro-commandes AGB soumet la dernière macro-commande suite à la requête logique LRQ, le traitement de la requête logique LRQ est achevé. Dans ce cas, le circuit d'adressage en macro-commandes AGB envoie un signal de confirmation (en anglais : acknowledge) au circuit d'adressage global AGA signalant à ce dernier que le traitement de la requête logique LRQ est achevé. En réponse, le circuit d'adressage global AGA commencera le traitement de la nouvelle requête logique LRQ d'une façon similaire au traitement de la requête logique LRQ faite dans l'étape S1. Autrement dit, l'histoire se répète. En écriture, la procédure d'accès est similaire exceptées les étapes S13 et S14 où les données sont écrites au lieu d'être lues et excepté que les macro-commandes sont d'un type d'accès en écriture au lieu d'être d'un type d'accès en lecture.

Dans les systèmes fonctionnels tels que décrits dans le paragraphe introductif, il est possible de distinguer plusieurs sortes de fonctions qui accèdent à la ressource collective.

On distingue deux grandes sortes de fonctions. Premièrement, les fonctions sensibles à la latence (attente entre deux accès) quand ils lisent ou stockent des données, ces fonctions s'arrêtent quand elles n'ont pas d'accès (c'est le cas du CPU). Ces fonctions peuvent en général faire des accès en lecture et sont reliées à l'interface mémoire INT, via un bus de lecture privé BBR et un bus d'écriture privé BBW. Deuxièmement, les fonctions pour lesquelles il est possible de savoir à l'avance quelles données seront nécessaires et où ces données sont situées, ces fonctions sont réalisées par des blocs contenant des mémoires tampons pour rendre ces fonctions insensibles à la latence. Au sein de ces dernières fonctions insensibles à la latence et qui font des accès à la ressource collective en respectant une certaine bande passante, existent deux sortes de fonctions. Tout d'abord, des fonctions critiques, qui font généralement des accès soit en lecture, soit en écriture, et sont souvent reliées à la ressource collective par un unique bus privé soit en lecture BBR soit en écriture BBW, ne peuvent pas attendre leurs données très longtemps. C'est le cas des fonctions d'affichage par exemple, qui lisent des pixels dans la mémoire et les présentent en sortie du système fonctionnel. Si les données ne sont pas accessibles dans les temps, les pixels ne peuvent être affichés et le système présente une erreur majeure. Ensuite des fonctions non critiques opèrent généralement de la mémoire en lecture vers la mémoire en écriture avec un traitement de données entre les deux. En général, ces fonctions sont reliées à l'interface mémoire INT via un bus de lecture privé BBR et un bus d'écriture privé BBW. Ces fonctions concernent par exemple le décodage, où un décodeur peut décoder une image toutes les 40 ms. Le fonctionnement de telles fonctions est schématisé par les pointillés sur la figure 3. Les processus non critiques présentent en effet une sorte de pipeline interne IPL dans lequel sont traitées les données. Ces processus gagnent en efficacité lorsque leur pipeline est plein en permanence et ne contient pas de 'bulles' dans lesquelles il n'y a pas de données.

On comprend aisément que ces différentes sortes de blocs nécessiteront d'avoir des accès à la ressource collective de fréquence et de régularité différentes. Il existe déjà des schémas d'accès pour arbitrer les accès des blocs sensibles à la latence et des blocs critiques. Un tel schéma d'accès est par exemple proposé dans la demande de brevet européen publiée sous le numéro EP1081603-A1 déposée par la demanderesse. Le schéma d'accès proposé dans cette dernière demande peut aisément être combiné avec la présente invention, le schéma proposé dans la dernière demande étant utilisé pour les fonctions les plus prioritaires et le schéma proposé dans cette invention pour les fonctions les moins prioritaires. L'invention prend en effet place au sein d'un schéma d'accès, globalement, par priorité. Un tel schéma d'accès place les fonctions sensibles à la latence et les fonctions critiques dans les niveaux les plus prioritaires de l'ordre de priorité. Eventuellement comme précisé auparavant, l'accès des fonctions prioritaires est régulé selon un schéma selon la demande de brevet EP1081603-A1. Viennent ensuite les fonctions non critiques dans les niveaux de priorité les plus bas. L'invention a pour but de réguler l'utilisation de la mémoire de manière à éviter les blocages et la présence de 'bulles' pendant lesquelles aucune des fonctions n'accède à la ressource collective et par conséquent pendant lesquelles les possibilités d'accès à la ressource collective sont mal utilisées. Ces situations sont particulièrement rencontrées pour les niveaux de priorité les plus bas pour lesquels il n'y a aucune fonction moins prioritaire qui peut profiter des accès mémoires libres. Ainsi, l'invention s'attache particulièrement au cas des blocs non critiques dont elle propose d'optimiser le fonctionnement.

Par exemple, pour un schéma d'accès par priorité simple où trois processus non critiques B1, B2, B3 partagent les trois niveaux de priorité les plus bas, la situation suivante peut se produire :

B1 finit son travail en premier, puis B2, enfin B3 peut profiter des accès mémoire mais B3, seul, peut ne pas être capable de profiter de tous les accès qui lui sont proposés. Pour éviter cela, soit B3 doit être capable d'utiliser toute la bande passante restante, soit les trois processus doivent travailler plus ou moins en parallèle et par conséquent finir leur travail en même temps pour répartir au maximum leurs accès dans le temps. Dans ce cas, les trois processus B1, B2 et B3 doivent être capables de prendre toute la bande passante qui reste. En effet un système où les blocs non critiques réunis sont capables d'utiliser la bande passante restante est toujours moins coûteux qu'un système où B3 seul doit être capable de l'utiliser car la condition est moins restrictive. C'est le genre de situation que l'invention se propose de résoudre en proposant que les processus aient des comportements différents en lecture et en écriture.

L'invention met en oeuvre un arbitre ARB pour gérer l'accès à la SDRAM par les différents processus P décrits ci-dessus. L'arbitre recueille les requêtes d'accès de tous les processus P et en sélectionne une. Une requête sélectionnée permet au processus ayant fait cette requête soit d'écrire, soit de lire seize mots de. 32 bits dans la SDRAM. Après cet accès à la SDRAM, l'arbitre sélectionne une autre requête, et cetera.

Les Figures 6 et 7 illustrent deux modes de réalisation d'arbitre selon l'invention pour gérer l'accès à une mémoire collective par différents processus. Selon l'invention, le système fonctionnel comprend une interface agencée pour mettre en oeuvre un schéma d'accès incluant au moins un état défini par un ordre de priorité pour un arbitrage selon lequel les fonctions peuvent accéder à la ressource collective, l'état étant caractérisé en ce que, pour au moins un ensemble d'au moins deux fonctions, les possibilités d'accès en lecture et les possibilités d'accès en écriture possèdent des niveaux de priorité différents, les possibilités d'accès en lecture possédant des niveaux de priorité consécutifs et supérieurs aux niveaux de priorités des possibilités d'accès en écriture.

Ainsi, l'invention garantit aux fonctions d'avoir un comportement différent en lecture et en écriture. Cela permet de réguler le fonctionnement des fonctions et de répartir les accès en exploitant notamment la durée du traitement des données. Cette durée de traitement des données est effectivement un laps de temps entre un accès en lecture et un accès en écriture pendant lequel la fonction qui a lu des données, les traitent. Selon l'invention, les niveaux de priorité en lecture étant supérieurs à ceux en écriture, les fonctions reçoivent chacune les données à traiter avant toute sortie de données traitées pour écriture vers la ressource collective. Ainsi l'invention permet que les fonctions aient, le plus possible, des données à traiter en continu et en parallèle et qu'elles exploitent leurs accès de manière plus régulière car la sortie des données traitées est limitée et donc régulée par les accès en écriture à la ressource collective. L'invention est particulièrement utile pour contrôler l'accès des fonctions non critiques à la ressource collective.

Un premier mode de réalisation de l'invention illustré sur la figure 6 met en oeuvre un arbitre comprenant un sélectionneur à priorité fixe FPS ayant M+5 entrées 1 à M+5, le nombre M étant supérieur ou égal à 2. Les requêtes d'accès à la SDRAM des processus P1-PN-1 sont gérées selon un ordre de priorité classique ou encore selon des méthodes de gestion optimisées telles que proposées par exemple dans le brevet cité auparavant. Le tiret entre deux processus P signifie tous les processus dont le numéro de référence est inclus entre les numéros de référence de ces deux processus P. Ces processus P1-PN-1 sont avantageusement des processus sensibles à la latence ou des processus critiques. La phase d'arbitrage est réalisée en testant la présence d'une requête sur chaque niveau de priorité en simultané et en sélectionnant celui qui a une requête et le niveau le plus élevé. Ainsi, en priorité, l'arbitre sélectionne parmi ces processus un processus P1-PN-1. Si aucun de ces processus n'a fait de requête, c'est-à-dire n'a soumis de macro-commande à l'arbitre, la main est donnée aux processus non critiques, ici, ils sont trois PN, PN+1, PN+2 en donnant la priorité, selon l'invention, aux macro-commandes ayant un type d'accès en lecture. Ces trois processus constituent un ensemble d'au moins deux fonctions. Puis ensuite, la main est donnée aux processus non critiques ayant fait une requête en écriture. Cela est figuré sur la figure 6 par les lettres R et W accolées aux références des processus non critiques PN, PN+1, PN+2. Les ensembles « PN_R » et « PN_W » définissent deux sous-ensembles de fonctions. Ainsi on note bien que les possibilités d'accès en écriture et en lecture ont des niveaux de priorité différents. Les niveaux de priorité en écriture des trois processus PN, PN+1, PN+2 sont insérés dans un ordre de priorité classique après les niveaux de priorité en lecture des trois processus. Cette caractéristique est essentielle à l'invention. Sachant que la macro-commande en lecture ne peut être générée par un processus que lorsqu'il y a de la place dans son pipeline, l'invention ne peut provoquer de blocage au sein dudit processus. Ensuite la requête sélectionnée est transmise au SIF. On comprend ici en quoi le schéma des accès à la mémoire représenté à la figure 2 va changer. D'abord les processus feront tous l'un après l'autre un accès en lecture puis, l'un après l'autre, ils feront un accès en écriture. Cependant ce mode de réalisation peut encore générer un blocage et ne permet pas d'éviter tous les cas où les accès mémoire sont sous exploités. En effet, l'ordre de priorité strict mis en oeuvre dans ce dernier mode de réalisation peut engendrer des blocages qui empêcheraient les accès en écriture du troisième processus. Ainsi ce dernier mode de réalisation ne permet pas que les processus de l'ensemble d'au moins deux fonctions finissent leur travail en même temps.

Un mode de réalisation avantageux illustré sur la figure 7 met en oeuvre un arbitre comprenant un sélectionneur à priorité fixe FPS ayant M+3 entrées 1 à M+3, le nombre M étant supérieur ou égal à 2 et un sélectionneur de processus MPS. Les requêtes d'accès à la SDRAM des processus P1-PN-1 sont gérées selon un ordre de priorité classique ou encore selon des méthodes de gestion optimisées telles que proposées par exemple dans le brevet cité auparavant. Ces processus P1-PN-1 sont avantageusement des processus sensibles à la latence ou des processus critiques. La phase d'arbitrage est réalisée en testant la présence de requête sur chaque niveau de priorité en simultané et en sélectionnant, le cas échéant, celui qui a une requête et le niveau le plus élevé. En effet, les requêtes sont soumises en simultané (lorsqu'elles existent) sur les entrées du sélectionneur à priorité fixe FPS. Ainsi, en priorité, l'arbitre sélectionne parmi ces processus un processus P1-PN-1. Si aucun de ces processus n'a fait de requête, c'est-à-dire n'a soumis de macro-commande à l'arbitre, la main est donnée aux processus non critiques, ici, ils sont trois PN, PN+1, PN+2 définissant un ensemble d'au moins deux fonctions, en donnant la priorité, selon l'invention, aux macro-commandes ayant un type d'accès en lecture. Puis ensuite, la main est donnée aux processus ayant fait une requête en écriture. Cela est figuré sur la figure 7 par les lettres R et W accolées aux références des processus PN, PN+1, PN+2. Les ensembles PN_R et PN_W définissent des sous-ensembles de fonctions. Dans le mode de réalisation présenté sur la figure 7, un seul niveau de priorité M+3 est attribué pour les trois processus non critiques en écriture. Autrement dit, le sous-ensemble de fonctions PN_W se partage le même niveau de priorité M+3. Ce niveau de priorité est donné au processus sélectionné dans le sélectionneur de processus MPS qui recueille les requêtes d'accès en écriture à la SDRAM des processus PN-PN+2. Il sélectionne parmi ces processus un processus P. Cette sélection se fait selon un schéma qui sera décrit plus en détail dans la suite. Si le processus P sélectionné a fait une requête en écriture, cette requête sera transmise à l'entrée M+3 du sélectionneur à priorité fixe FPS. Sinon, aucune requête n'est transmise à cette entrée pour l'arbitrage. Donc, si aucun des processus ayant un niveau de priorité plus élevé n'a fait de requête, qu'aucun des trois processus non critiques n'a fait de requête en lecture et que le processus P sélectionné par le sélectionneur de processus MPS a fait une requête, cette requête sera sélectionnée. S'il n'y a pas une telle requête, la possibilité d'accès n'est pas exploitée. Dans tous les cas où l'arbitrage propose une possibilité d'accès au niveau de priorité M+3, qu'il y ait accès ou non, la sélection de processus au sein du sélectionneur de processus MPS change pour sélectionner un autre processus du sous-ensemble PN_W-PN+2_W. Ici donc, plusieurs états (I) sont parcourus, un état (I) étant défini par un ordre de priorité servant pour un arbitrage et dans lequel au moins un niveau de priorité constitue une possibilité d'accès pour une des fonctions appartenant à un sous-ensemble de fonctions, ici PN_W-PN+2_W, se partageant le même niveau de priorité, ici M+3, sur plusieurs états (I). En effet à chaque arbitrage peut être attaché un état I auquel correspond l'ordre de priorité comprenant P1 à PN-1, PN_R à PN+2_R et le processus sélectionné au sein de PN_W à PN+2_W. Chacun des processus PN_W à PN+2_W est donc sélectionné à tour de rôle au cours du parcours de plusieurs états (I), le nombre d'états (I) parcouru pour faire un « tour » complet des processus en écriture dépendant de la fréquence des accès proposés au niveau de priorité M+3. En effet, la fréquence des accès proposés au niveau M+3 détermine la fréquence de changement de sélection au sein du sélectionneur MPS. Ce niveau de priorité partagé est aussi envisageable avec cependant moins d'avantages pour regrouper les possibilités d'accès des processus en lecture.

Ce mode de réalisation avantageux permet de faire un arbitrage sur moins de niveaux de priorité que le mode de réalisation précédent et est donc plus rapide et plus simple. De plus, ce mode de réalisation permet que les fonctions travaillent en écriture en parallèle sans générer de blocage et optimisent ainsi l'utilisation des accès à la ressource collective. En effet selon ce dernier mode de réalisation avantageux, les fonctions non critiques finissent leur travail en même temps.

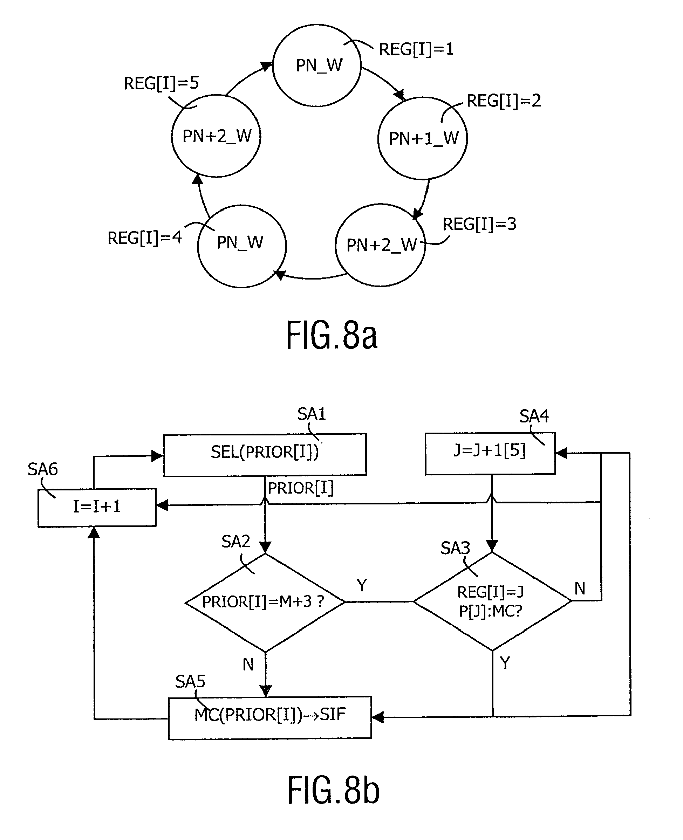

Un mode de réalisation préféré décrit plus précisément le fonctionnement du sélectionneur de processus décrit plus en détail dans les figures 8a et 8b. Dans le mode de réalisation préféré, un même niveau de priorité M+3 constitue une possibilité d'accès en écriture partagée, sur le parcours de plusieurs états I, entre les possibilités d'accès en écriture d'un sous-ensemble de fonctions PN_W à PN+2_W. La figure 8a illustre une possibilité de fonctionnement du sélectionneur de processus MPS. Un registre REG est consulté à chaque arbitrage pour un état I où le niveau de priorité M+3, commun à l'ensemble d'au moins deux fonctions, constitué par les processus PN-PN+2, au sein du sélectionneur de processus MPS, est questionné. A chaque valeur du registre correspond une fonction, ici, PN_W, PN+1_W ou PN+2_W. Ce registre peut être implémenté sur un, deux, trois bits ou plus en fonction du nombre de procédés que l'on souhaite voir fonctionner en parallèle et/ou du nombre de fois où on souhaite voir apparaître un processus donné sur un « tour » complet des valeurs du registre. Ainsi la figure 8a représente cinq valeurs de registre 1 à 5 sous forme de cercles. Selon l'invention on ne regarde qu'un processus non critique en écriture par état, plusieurs états consécutifs pouvant cependant avoir le même processus non critique en écriture à regarder dans l'arbitrage. En effet l'incrémentation du registre ne se fait pas à chaque changement d'état mais uniquement quand le niveau de priorité concerné a une possibilité d'accès. Ces valeurs sont parcourues l'une après l'autre et d'une façon cyclique. Chaque valeur représente la sélection d'un des processus. La répartition relative des accès entre les différents processus en écriture peut aussi être contrôlée via la structure de ce registre. En effet en supposant que trois processus PN_W, PN+1_W et PN+2_W se partagent le niveau de priorité M+3 et que les bandes passantes sur leur bus d'écriture sont respectivement de 40 Mbytes/s, 20 Mbytes/s et 40 Mbytes/s, il est utile de donner 2/5 de la bande passante aux processus PN_W et PN+2_W et 1/5 à PN+1_W. Cette répartition est illustrée sur la figure 8a où le registre peut prendre 5 valeurs différentes : 2 pour PN_W, 2 pour PN+2_W et 1 pour PN+1_W. Un avantage supplémentaire à cette répartition est que lorsqu'un des processus ne requiert aucun accès (par exemple, PN+1), la bande passante disponible pour les processus non critique tend à se répartir naturellement moitié/moitié pour PN et PN+2. Si PN ne requiert aucun accès, la bande passante tendra à se répartir à un tiers pour PN+1 et à deux tiers pour PN+2. Ceci est dû au fait que, même si le processus sélectionné dans le MPS ne fait pas d'accès la valeur de registre est incrémentée. ici le registre est donc avantageusement mis en oeuvre sur trois bits. Le nombre d'états (I) pour parcourir le cycle de la figure 8a dépend de la fréquence des accès des fonctions non critiques en écriture, c'est-à-dire de la fréquence du questionnement du niveau de priorité M+3 dans cet exemple.

La figure 8b illustre plus précisément comment la sélection se fait au sein du sélectionneur MPS et comment on se déplace d'un état à l'autre sur la figure 8a. Dans cette figure on considère que l'accès des processus P1 à PN-1 est géré selon un ordre de priorité simple où le niveau de priorité le plus élevé est sélectionné. L'étape SA1 est la première étape effectuée après un saut d'état I vers un état I+1. Ainsi dans une première étape SA1, le sélectionneur à priorité fixe FPS pour l'arbitrage à l'état présent I sélectionne un niveau de priorité PRIOR[I]. Si au moins une requête est présente sur les niveaux de priorité 1 à M+2, le niveau de priorité correspondant au nombre le plus petit est sélectionné, sinon c'est le niveau M+3 qui est sélectionné par défaut. Dans une étape SA2, le niveau de priorité est comparé à M+3. Si le niveau de priorité est différent de M+3, l'accès à la mémoire est accordé à la macro-commande MC dans une étape SA5 puis on passe à l'état I+1 suivant dans une étape SA6 pour un nouvel arbitrage, ce qui implique que le procédé représenté par la Figure 8b se répète. Si le niveau de priorité est égal à M+3, une étape SA3 regarde la valeur du registre REG[I] pour l'état I présent et regarde si le processus correspondant à la valeur du registre a présenté une macro-commande MC. Si le processus a présenté une macro-commande MC, l'accès est accordé à cette macro-commande MC correspondant au niveau de priorité PRIOR[I] dans une étape SA5 et la valeur du registre REG est incrémentée à J+1 modulo 5 dans une étape SA4 et le système passe à l'état I+1 suivant dans une étape SA6. Si le processus n'a pas présenté de macro-commande, le registre est incrémenté à J+1 modulo 5 dans une étape SA4, de manière à ce que l'accès soit proposé à un autre processus à l'état suivant et le système passe à l'état I+1 suivant dans une étape SA6.

Avec un arbitrage tel que proposé dans ce mode de réalisation préféré, il est possible d'avoir une exploitation maximale de la ressource collective si la somme des bandes passantes moyennes utilisées par la totalité des processus (sensibles à la latence, critiques et non critiques) est inférieure à la bande passante disponible et si la bande passante en pic (bande passante instantanée) pour la totalité des processus non critiques est supérieure à la bande passante disponible.

Dans le mode de réalisation préféré, les avantages de l'invention sont les suivants : il n'y a pas de possibilités d'accès gaspillées, les processus non critiques sont toujours prêts à prendre les possibilités d'accès libres, tous les processus non critiques finissent leur travail en même temps, les pipelines des fonctions non critiques sont toujours pleins.

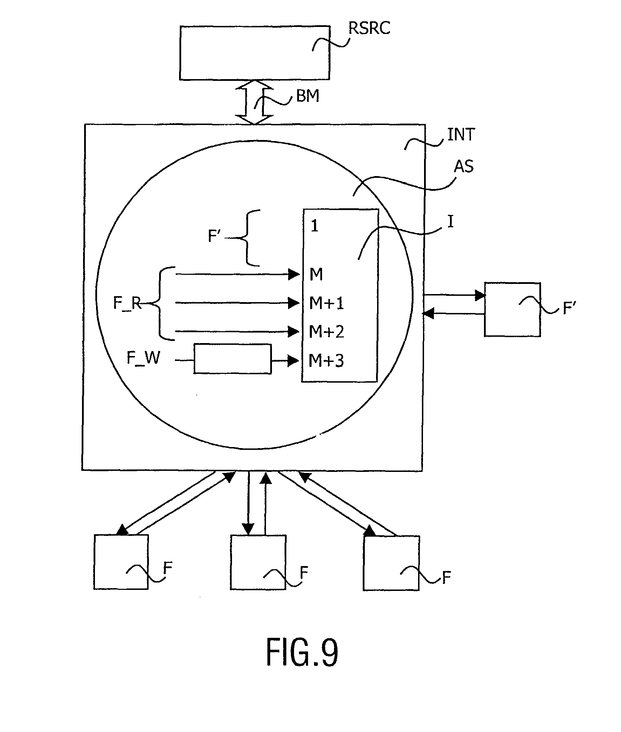

La Figure 9 illustre des caractéristiques de base d'une partie de l'invention telle qu'exposée dans la partie "exposé de l'invention". Un système fonctionnel comprend un ensemble de fonctions F, F' devant accéder à une ressource collective (RSRC). Le système comprend au moins un état (I) défini par un ordre de priorité pour un arbitrage selon lequel les fonctions (F, F') peuvent accéder à la ressource collective (RSRC), l'état (I) étant caractérisé en ce que, pour au moins un ensemble d'au moins deux fonctions (F), les possibilités d'accès en lecture F_R et les possibilités d'accès en écriture F_W possèdent des niveaux de priorité différents, les possibilités d'accès en lecture possédant des niveaux de priorité consécutifs et supérieurs aux niveaux de priorités des possibilités d'accès en écriture.

Le dispositif de traitement de données décrit précédemment en référence aux Figures 1-8 est un exemple d'implémentation des caractéristiques de base illustré à la Figure 9. La ressource collective RSRC illustrée à la Figure 9 est implémentée sous la forme de la mémoire collective SDRAM illustré à la Figure 1. Les fonctions F, F' illustrées à la Figure 9 sont implémentées sous la forme des blocs B illustrés à la Figure 1. L'interface mémoire INT illustrée à la Figure 1 implémente un procédé d'accès illustré aux Figures 8a et 8b. Ce schéma d'accès est caractérisé par une pluralité variable d'états qui parcourent les valeurs de registre illustrées à la Figure 8a. L'étendue des possibilités d'accès à l'aide d'une macro-commande est de 16 adresses de mémoire. Chaque état définit un ordre de priorité à l'aide duquel un arbitrage est réalisé, arbitrage selon lequel un bloc B peut accéder à la mémoire collective SDRAM. Cet ordre de priorité peut être le même dans tous les états (I), c'est ce qui est présenté sur la figure 6, ou être modifié à chaque fois qu'une possibilité d'accès est accordée au niveau de priorité le plus bas, ceci est illustré sur la figure 7.

L'invention peut être appliquée dans un circuit intégré comprenant un décodeur MPEG et d'autres circuits pour le traitement et l'affichage d'images. Dans un tel circuit intégré différents processus ont lieu, un processus étant l'équivalent d'une fonction. Il existe différents processus P devant accéder à une mémoire collective de type SDRAM, dénommée SDRAM dans la suite :
P1 : DISP (Display)
P2 : OSD (On Screen Display)
P3 : BCKGND (Background)
P4 : CCIR656
P5 : VMIX (Video Mixer)
P6 : AUDIOFIFO (Audio FIFO Read and Write)
P7 : AUDIOBUF (Audio Buffer Read and Write)
P8 : VFW (Video FIFO Write)
P9 : VFR (Video FIFO, read)
P10: MC (Motion Compensation)
P11 : DMU
P12 : INTERP

Le processus P1 (DISP) concerne l'affichage des images décodées. Le processus P2 (OSD) concerne l'affichage de données graphiques en surimpression sur une image décodée affichée. Le processus P3 (BCKGND) concerne l'affichage d'une image fixe en fond d'écran ou en transparence avec une image décodée et traitée. Le processus P4 (CCIR656) concerne une entrée du circuit intégré permettant de recevoir des images déjà décodées et de les stocker en mémoire. Ces images peuvent être affichées en lieu et place des images provenant du décodage MPEG au moyen du processus P1 (DISP). Le processus P5 (VMIX) concerne le mixage de trois flux de données provenant des processus P1 (DISP), P2 (OSD) et P3 (BCKGND). Les processus P8 (VFW), P9 (VFR) et P6 (AUDIOFIFO) concernent l'écriture et la lecture de données vidéo et audio codées extraites d'un flux de données MPEG au moyen d'un dispositif de désembrouillage / démultiplexage. Le processus P7 (AUDIOBUF) concerne l'écriture et la lecture de résultats intermédiaires d'un processeur audio. Le processus P10 (MC) concerne la compensation de mouvement qui constitue une étape dans le décodage MPEG vidéo. Le processus P11 (DMU) concerne un dispositif d'accélération qui sert à faire des manipulations relativement complexes sur des données dans la SDRAM comme, par exemple, un déplacement d'un ou plusieurs blocs de données ou un filtrage. Le processus P12 (INTERP) concerne la dernière partie d'un décodage MPEG qui fournit des images décodées à écrire dans la SDRAM en vue de leur affichage ou leur utilisation en tant qu'images de référence ou les deux. Les processus P8 à P12 ne sont pas critiques et leurs accès à la ressource collective peuvent donc être gérés selon l'invention. Si les premiers processus P1 à P7 sont dans un ordre de priorité classique dans le schéma d'accès alors M=8, les accès en lecture des processus P8 à P12 sont sur les niveaux de priorité 8 à 12 puis les accès en écriture des processus P8 à P12 sont regroupés sur le niveau de priorité 13 avec une répartition sur un cycle telle que présentée sur la figure 8a.

La description ci-dessus en référence aux Figures illustre l'invention plutôt qu'elle ne la limite. Il est évident qu'il existe de nombreuses alternatives qui rentrent dans la portée des revendications ci-jointes. A cet égard, quelques remarques sont faites en conclusion.

L'invention peut être appliquée dans n'importe quel système fonctionnel. La Figure 1 illustre seulement un exemple selon lequel l'invention est appliquée dans un dispositif de traitement de données. Il est également possible, par exemple, d'appliquer l'invention dans un système de communication comprenant un serveur central et une pluralité de terminaux. L'invention peut être appliquée pour gérer l'accès au serveur central par les terminaux d'une façon avantageuse.

Il existe de nombreuses manières pour implémenter des fonctions au moyen d'articles physiques (en anglais : items of hardware) ou de logiciels (en anglais : software) ou d'une combinaison des deux. A cet égard, les figures sont très schématiques, chaque figure représentant un mode de réalisation seulement. Donc, bien qu'une figure montre différentes fonctions sous forme de blocs séparés, ceci n'exclut pas du tout qu'un seul article physique ou logiciel effectue plusieurs fonctions. Ceci n'exclut nullement qu'une fonction puisse être effectuée par un ensemble d'articles physiques ou de logiciels.

Par exemple, l'interface mémoire illustrée à la Figure 4 comprend différents blocs qui, en combinaison, contrôlent l'accès à la mémoire collective et qui contrôlent les mémoires comprises dans l'interface mémoire. En principe, il est possible d'implémenter ces blocs au moyen d'un circuit d'ordinateur convenablement programmé. Un jeu d'instructions contenu dans une mémoire de programmation peut provoquer le circuit d'ordinateur à effectuer les différentes opérations décrites précédemment en référence aux Figures 1-8. Le jeu d'instructions peut être chargé dans la mémoire de programmation par la lecture d'un support de données comme, par exemple, un disque qui contient le jeu d'instructions. La lecture peut s'effectuer par l'intermédiaire d'un réseau de communication comme, par exemple, l'Internet. Dans cas, un fournisseur de service (en anglais : service provider) mettra le jeu d'instructions à la disposition des intéressées.

Aucun signe de référence entre parenthèses dans une revendication ne doit être interprété de façon limitative. Le mot "comprenant" n'exclut pas la présence d'autres éléments ou étapes listés dans une revendication. Le mot "un" ou "une" précédant un élément ou une étape n'exclut pas la présence d'une pluralité de ces éléments ou ces étapes.

## Revendications

1. Système fonctionnel comprenant un ensemble d'unités fonctionnelles comprenant chacune un processeur (P) devant accéder en lecture ou en écriture à une ressource collective (RSRC), le système incluant une interface (INT) agencée pour mettre en oeuvre un schéma d'accès (AS) définissant un ordre de priorité selon lequel les unités fonctionnelles peuvent accéder en lecture ou en écriture à la ressource collective (RSRC), et pour au moins un ensemble d'au moins deux unités fonctionnelles , les possibilités d'accès en-lecture (F_R) et les possibilités d'accès en écriture (F_W) possèdent des niveaux de priorité différents, les possibilités d'accès en lecture possédant des niveaux de priorité consécutifs et supérieurs aux niveaux de priorité des possibilités d'accès en écriture, **caractérisé en ce que**, lorsque plusieurs unités fonctionnelles possèdent des possibilités d'accès en écriture partageant le même niveau de priorité, la répartition desdits accès en écriture partageant le même niveau de priorité est effectuée en fonction des bandes passantes de leur bras d'écriture respectifs de manière cyclique.

2. Méthode pour gérer un système fonctionnel comprenant un ensemble d'unités fonctionnelles comprenant chacune un processeur (P) et une ressource collective (RSRC) à laquelle les unités fonctionnelles (F, F') doivent accéder, la méthode comprenant les étapes suivantes:
- gestion, pour au moins un ensemble d'au moins deux unités fonctionnelles, des possibilités d'accès en lecture (F_R) et des possibilités d'accès en écriture (F_W) selon des niveaux de priorité différents, les possibilités d'accès en lecture possédant des niveaux de priorité consécutifs et supérieurs aux niveaux de priorité des possibilités d'accès en écriture, la méthode étant **caractérisée en ce que** pour la
- gestion des possibilités d'accès en écriture partageant le même niveau de priorité, la répartition desdits accès en écriture partageant le même niveau de priorité étant effectuée en fonction des bandes passantes des bras d'écriture respectifs de manière cyclique.

3. Produit "programme d'ordinateur" pour un système fonctionnel comprenant un ensemble d'unités fonctionnelles comprenant chacune un processeur (P) et une ressource collective (RSRC) à laquelle les fonctions (F, F') doivent accéder, **caractérisé en ce que** le produit "programme d'ordinateur" comprend un ensemble d'instructions qui, quand il est chargé dans le système fonctionnel, amène le système fonctionnel à effectuer la méthode revendiquée dans la revendication 2.

## Claims

1. Functional system comprising a set of functional units each comprising a processor (P) that must obtain read or write access to a collective resource (RSRC), the system including an interface (INT) arranged to implement an access schema (AS) defining an order of priority according to which the functional units can obtain read or write access to the collective resource (RSRC), and for at least one set of at least two functional units, the read access possibilities (F_R) and the write access possibilities (F_W) have different levels of priority, the read access possibilities having levels of priority that are consecutive and higher than the levels of priority of the write access possibilities, **characterized in that**, when several functional units have write access possibilities sharing the same level of priority, the distribution of the said write access executions sharing the same level of priority is carried out as a function of the bandwidths of their respective write buses in a cyclical manner.

2. Method for managing a functional system comprising a set of functional units each comprising a processor (P) and a collective resource (RSRC) to which the functional units (F, F') must gain access, the method comprising the following steps:
- managing, for at least one set of at least two functional units, the read access possibilities (F_R) and the write access possibilities (F_W) according to different levels of priority, the read access possibilities having levels of priority that are consecutive and higher than the levels of priority of the write access possibilities, the method being **characterized in that** for
- managing the write access possibilities sharing the same level of priority, the distribution of the said write access executions sharing the same level of priority being carried out as a function of the bandwidths of the respective write buses in a cyclical manner.

3. "Computer program" product for a functional system comprising a set of functional units each comprising a processor (P) and a collective resource (RSRC) to which the functions (F, F') must gain access, **characterized in that** the "computer program" product comprises a set of instructions which, when it is loaded into the functional system, causes the functional system to carry out the method claimed in Claim 2.

## Patentansprüche

1. Funktionssystem, das eine Gruppe von Funktionseinheiten enthält, die je einen Prozessor (P) enthalten, der im Lese- oder Schreibmodus auf eine gemeinsame Ressource (RSRC) zugreifen soll, wobei das System eine Schnittstelle (INT) umfasst, die eingerichtet ist, um einen Zugriffsschaltplan (AS) anzuwenden, der eine Prioritätsreihenfolge definiert, gemäß der die Funktionseinheiten im Lese- oder Schreibmodus auf die gemeinsame Ressource (RSRC) zugreifen können, und für mindestens eine Einheit von mindestens zwei Funktionseinheiten die Zugriffsmöglichkeiten im Lesemodus (F_R) und die Zugriffsmöglichkeiten im Schreibmodus (F_W) unterschiedliche Prioritätsebenen besitzen, wobei die Zugriffsmöglichkeiten im Lesemodus aufeinanderfolgende und höhere Prioritätsebenen besitzen als die Zugriffsmöglichkeiten im Schreibmodus, **dadurch gekennzeichnet, dass**, wenn mehrere Funktionseinheiten Zugriffsmöglichkeiten im Schreibmodus besitzen, die sich die gleiche Prioritätsebene teilen, die Verteilung der sich die gleiche Prioritätsebene teilenden Zugriffe im Schreibmodus abhängig von den Bandbreite ihrer jeweiligen Schreib-Busleitung auf zyklische Weise durchgeführt wird.

2. Verfahren zur Verwaltung eines Funktionssystems, das eine Gruppe von Funktionseinheiten enthält, die je einen Prozessor (P) und eine gemeinsame Ressource (RSRC) enthalten, auf die die Funktionseinheiten (F, F') zugreifen sollen, wobei das Verfahren die folgenden Schritte enthält:
- Verwaltung, für mindestens eine Gruppe von mindestens zwei Funktionseinheiten, der Zugriffsmöglichkeiten im Lesemodus (F_R) und der Zugriffsmöglichkeiten im Schreibmodus (F_W) gemäß verschiedenen Prioritätsebenen, wobei die Zugriffsmöglichkeiten im Lesemodus aufeinanderfolgende und höhere Prioritätsebenen besitzen als die Prioritätsebenen der Zugriffsmöglichkeiten im Schreibmodus,
wobei das Verfahren **dadurch gekennzeichnet ist, dass** für die Verwaltung der Zugriffsmöglichkeiten im Schreibmodus, die sich die gleiche Prioritätsebene teilen, die Verteilung der sich die gleiche Prioritätsebene teilenden Zugriffe im Schreibmodus abhängig von den Bandbreiten der jeweiligen Schreib-Busleitungen auf zyklische Weise durchgeführt wird.

3. "Computerprogramm"-Produkt für ein Funktionssystem, das eine Gruppe von Funktionseinheiten enthält, die je einen Prozessor (P) und eine gemeinsame Ressource (RSRC) enthalten, auf die die Funktionen (F, F') zugreifen sollen, **dadurch gekennzeichnet, dass** das "Computerprogramm"-Produkt eine Gruppe von Anweisungen enthält, die, wenn sie in das Funktionssystem geladen wird, das Funktionssystem veranlasst, das im Anspruch 2 beanspruchte Verfahren auszuführen.
